# EUROPÄISCHE PATENTSCHRIFT

(11) **EP 1 495 792 B1**
(45) Veröffentlichungstag und Bekanntmachung des Hinweises auf die Patenterteilung: **23.09.2009**
(21) Anmeldenummer: 04015572.3
(22) Anmeldetag: 02.07.2004
(51) Int. Cl.: B01D 46/02, B01D 46/24, F01N 3/022, F01N 3/021, B01D 39/20

(54) **Filtertasche für einen Abgasfilter und Verfahren zu ihrer Herstellung**
Filter bag for an exhaust gas filter and method for its manufacture
Filter à manche pour filtre des gaz d'échappement et méthode pour sa fabrication

(30) Priorität: 11.07.2003 DE 10331347
(43) Veröffentlichungstag der Anmeldung: 12.01.2005
(73) Patentinhaber: Daimler AG, 70327 Stuttgart (DE)
(72) Erfinder: Hütwohl, Georg, Dr., 59494 Soest (DE); Kästner, Thomas, 44229 Dortmund (DE); Kohberg, Carsten, 58706 Menden (DE); Neumann, Peter, 58706 Menden (DE); Redondo, René, 42899 Remscheid (DE)
(74) Vertreter: JENSEN & SON

(56) Entgegenhaltungen:
- WO-A-02/102492
- DE-A- 10 128 938
- US-A- 5 944 859
- US-A1- 2003 038 088

## Beschreibung

Die Erfindung betrifft eine Filtertasche für einen Partikelfilter zur Beseitigung von in einem Abgasstrom, insbesondere in einer Abgasanlage einer Brennkraftmaschine, enthaltenen Partikeln, mit einem Taschenteil und mit einem mit dem Taschenteil verbundenen Verbindungsteil. Des Weiteren betrifft die Erfindung einen Partikelfilter und ein Verfahren zur Herstellung einer Filtertasche für einen Partikelfilter.

Die EP 0 331 885 B1 beschreibt einen Abgasfilter zur Beseitigung von schädlichen Bestandteilen aus Abgasen, der einen aus hochtemperaturbeständigem Sintermaterial bestehenden Filterkörper mit einer Vielzahl von Einlass- und Auslasskanälen aufweist.

Aus der DE 101 28 938 A1 ist ein Partikelfilter bekannt, welcher mehrere Filtertaschen aufweist, wobei der Abgasstrom beim Einströmen in die aus Sintermetall bestehenden oder mit Sintermetallpulver beschichteten Filtertaschen gereinigt wird.

Aus der WO 02/102492 A1 ist ein Sintermetallpartikelfilter zur Beseitigung von in einem Abgasstrom, insbesondere in einer Abgasanlage einer Brennkraftmaschine, enthaltenen Partikeln bekannt. Der Sintermetallpartikelfilter weist als Filtermaterial einen aus Streckmetall gebildeten gasdurchlässigen Träger auf, dessen Öffnungen mit Sintermetallpulver verfüllt bzw. beschichtet sind. Der Partikelfilter kann aus einzelnen Filtertaschen aufgebaut sein, deren Taschenteile aus dem Filtermaterial bestehen.

Ein Problem, das sich bei der Herstellung solcher Filtertaschen für Partikelfilter ergeben hat, ist die Verbindung der Filtertaschen mit einem Halteelement, an dem mehrere Filtertaschen zur Bildung des Partikelfilters angebracht sind. Insbesondere wenn das Material der Filtertasche mit dem Halteelement verschweißt werden soll, ergeben sich regelmäßig Probleme bezüglich der Dauerfestigkeit einer solchen Schweißverbindung.

Des weiteren ist in demjenigen Bereich der Filtertasche, an dem diese an dem Halteelement angebracht werden soll, ein hoher Umformgrad erforderlich, der jedoch bei dem porösen, gasdurchlässigen Material zu Schwierigkeiten führt.

Es ist daher Aufgabe der vorliegenden Erfindung, eine Filtertasche für einen Partikelfilter zu schaffen, bei welcher eine einfache Verbindung mehrerer Filtertaschen mit einem Halteelement gegeben ist.

Erfindungsgemäß wird diese Aufgabe durch die in Anspruch 1 genannten Merkmale gelöst.

Das aus einem mit einem Sintermetallpulver beschichteten, gasdurchlässigen Trägermaterial bestehende Taschenteil stellt die Filterwirkung der erfindungsgemäßen Filtertasche durch das Ermöglichen der Ablagerung von Partikeln an demselben sicher. Dagegen ermöglicht das Verbindungsteil, welches erfindungsgemäß aus einem umformbaren, gasundurchlässigen Material besteht, eine einfache Verbindung der Filtertasche mit einem Halteelement oder dergleichen. Des weiteren kann das Verbindungsteil, dadurch dass es aus einem anderen, einfacher umzuformenden Material als das Taschenteil besteht, mit sehr viel geringerem Aufwand mit einer Geometrie versehen werden, die eine Abdichtung der Verbindungsteile gegeneinander ermöglicht, wenn diese in einem Partikelfilter angeordnet sind.

Die Funktion der erfindungsgemäßen Filtertasche ist dadurch sichergestellt, dass das Taschenteil und das Verbindungsteil gemeinsam ein Volumen bilden, in welches der Abgasstrom einströmt, gefiltert wird und das Volumen wieder verlässt.

In einer ersten Ausführungsform der Erfindung kann vorgesehen sein, dass das Taschenteil und das Verbindungsteil zwei separate, durch Verschweißen miteinander verbundene Bauteile sind. Zwar ist es bei einer solchen Ausführungsform auch erforderlich, das Trägermaterial zu verschweißen, im vorliegenden Fall mit dem Verbindungsteil, allerdings steht hierfür eine erheblich größere Fläche als bei den problematischen Verbindungen gemäß dem Stand der Technik zur Verfügung, sodass mit sehr geringen Schwierigkeiten beim Verschweißen des Verbindungsteils mit dem Taschenteil zu rechnen ist.

In einer zweiten Ausführungsform kann vorgesehen sein, dass das Taschenteil und das Verbindungsteil aus einem einstückigen Material ausgebildet sind. Diese Ausführungsform hat den Vorteil, dass es nicht erforderlich ist, das Verbindungsteil und das Taschenteil miteinander zu verbinden. Es muss lediglich dafür gesorgt werden, dass das Taschenteil gasdurchlässig und mit einem Sintermetallpulver beschichtbar ist, und dass das Verbindungsteil aus einem umformbaren, gasundurchlässigen Material besteht.

Diesem Erfordernis kann beispielsweise dadurch Rechnung getragen werden, dass das Verbindungsteil und das Taschenteil aus einem einstückigen Streckmetallblech mit gestreckten Bereichen und nicht gestreckten Bereichen gebildet sind, wobei die gestreckten Bereiche des Streckmetallblechs das Taschenteil und die nicht gestreckte Bereiche des Streckmetallblechs das Verbindungsteil bilden.

Hierbei ist es auch möglich, das Filtermaterial gegebenenfalls nur im Bereich der Umformung so zu gestalten, dass eine Umformung im Bereich des Kopfes der Filtertasche ohne Aufreißen der Filterfläche erreicht wird.

Ein Partikelfilter zur Beseitigung von in einem Abgasstrom, insbesondere in einer Abgasanlage einer Brennkraftmaschine, enthaltenen Partikeln, mit mehreren nebeneinander angeordneten Filtertaschen ergibt sich aus Anspruch 8.

Aus den Ansprüchen 12 und 14 können zwei alternative Verfahren zur Herstellung einer erfindungsgemäßen Filtertasche für einen Partikelfilter entnommen werden.

Weitere vorteilhafte Ausgestaltungen und Weiterbildungen der Erfindung ergeben sich aus den restlichen Unteransprüchen sowie aus den nachfolgend anhand der Zeichnung prinzipmäßig dargestellten Ausführungsbeispielen.

Dabei zeigen:
- Fig. 1: eine erste Ausführungsform der erfindungsgemäßen Filtertasche;
- Fig. 2: eine zweite Ausführungsform der erfindungsgemäßen Filtertasche;
- Fig. 3: einen Schnitt nach der Linie III - III aus Fig. 2; und
- Fig. 4: einen Partikelfilter mit mehreren erfindungsgemäß ausgebildeten Filtertaschen.

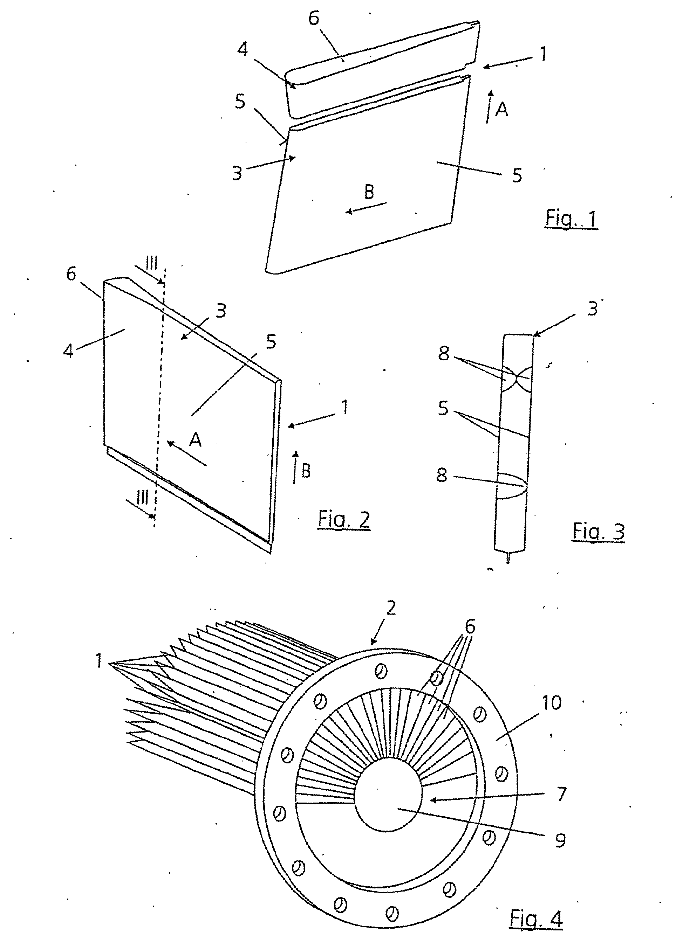

Fig. 1 zeigt eine Filtertasche 1 für einen in Fig. 4 dargestellten Partikelfilter 2. Der Partikelfilter 2 ist zur Beseitigung von in einem Abgasstrom, insbesondere in einer Abgasanlage einer Brennkraftmaschine, enthaltenen Partikeln vorgesehen, wobei weder die Brennkraftmaschine noch deren Abgasanlage dargestellt sind.

Die Filtertasche 1 weist ein Taschenteil 3 und ein Kopfteil bzw. Verbindungsteil 4 auf, welche gemeinsam ein Volumen bilden. Das Taschenteil 3 weist im vorliegenden Fall zwei Seitenwände 5 auf, welche sowohl in der mit dem Pfeil A bezeichneten Längsrichtung der Filtertasche 1 als auch in der mit dem Pfeil B bezeichneten Querrichtung der Filtertasche 1 im wesentlichen parallel zueinander verlaufen, wobei in Richtung des Pfeils B eine geringe Konizität des Taschenteils 3 zu erkennen ist. Mit Ausnahme der unteren Abschlusskante sowie der geringen Konizität in Querrichtung ergibt sich somit eine annähernd rechteckige Querschnittsform des Taschenteils 3.

Das Taschenteil 3 besteht aus einem gasdurchlässigen Trägermaterial, beispielsweise einem Drahtgewebe, welches mit einem Sintermetallpulver beschichtet wurde. Bei dem Beschichten mit dem Sintermetallpulver werden die Hohlräume des Drahtgewebes gefüllt. Durch die Porosität des Taschenteils 3 kann das Abgas durch die Seitenwände 5 in die Filtertasche 1 und damit in das von dem Taschenteil 3 und dem Verbindungsteil 4 gebildete Volumen einströmen und verlässt dieselbe an einer axialen Öffnung 6 des Verbindungsteils 4, welche über den gesamten Querschnitt des Verbindungsteils 4 verläuft. Hierbei übernehmen die Seitenwände 5 durch die Beschichtung mit dem Sintermetallpulver die Reinigungswirkung durch das Abfiltern von Partikeln in dem Abgasstrom. Selbstverständlich ist jedoch prinzipiell auch eine gegenüber der geschilderten bevorzugten Strömungsrichtung umgekehrte Strömungsrichtung möglich.

Das Verbindungsteil 4, welches gemäß der Ausführungsform von Fig. 1 ein von dem Taschenteil 3 separates Bauteil darstellt, wird mit demselben durch Verschweißen verbunden, wobei Fig. 1 den Zustand zeigt, in dem das Verbindungsteil 4 noch nicht mit dem Taschenteil 3 verbunden ist. Um das Verbindungsteil 4 und somit die Filtertasche 1 mit einem in Fig. 4 dargestellten Halteelement 7 des Partikelfilters 2 verschweißen zu können, besteht das Verbindungsteil 4 vorzugsweise aus einem gasundurchlässigen, dichten Material mit einer im wesentlichen glatten Oberfläche, vorzugsweise aus einem temperaturbeständigen Metallblech. Es kann jedoch auch vorgesehen sein, das Taschenteil 3 und das Verbindungsteil 4 einstückig aus Streckmetall auszubilden. Das Verbindungsteil 4 weist im Querschnitt eine Keilform auf, deren Funktion unter Bezugnahme auf Fig. 4 näher erläutert wird.

Die Filtertasche 1 gemäß Fig. 1 kann folgendermaßen hergestellt werden: Zunächst wird das gasdurchlässige Trägermaterial mit dem Sintermetallpulver beschichtet und anschließend zu dem Taschenteil 3 umgeformt. Trotz der oben beschriebenen Porosität des Taschenteils 3 entstehen bei dieser Umformung keine Beschädigungen an demselben. Das Taschenteil 3 erhält dabei an seiner Unterseite eine Längsnaht, die beispielsweise geschweißt sein kann. Statt einer kompletten Umformung könnten die beiden Seitenwände 5 auch an zwei Kanten miteinander verschweißt werden. Aus dem gasundurchlässigen Material wird das Verbindungsteil 4 geformt und anschließend werden das Taschenteil 3 und das Verbindungsteil 4 beispielsweise durch Schweißen miteinander verbunden.

In Fig. 2 ist eine alternative Ausführungsform der Filtertasche 1 in einer gegenüber Fig. 1 um 90° verdrehten Lage dargestellt. Hierbei sind das Taschenteil 3 und das Verbindungsteil 4 aus einem einstückigen Streckmetallblech gebildet, welches gestreckte Bereiche, die gasdurchlässig sind, und nicht gestreckte Bereiche, die gasundurchlässig sind, aufweist. Hierbei bilden die gestreckten Bereiche das Taschenteil 3 und die nicht gestreckten Bereiche bilden das Verbindungsteil 4. Für den Fachmann ist der Begriff Streckmetall und das zur Herstellung desselben verwendete Verfahren allgemein bekannt, weshalb hierin nicht näher darauf eingegangen werden muss.

Die Filtertasche 1 gemäß Fig. 2 kann folgendermaßen hergestellt werden: Zunächst wird das Streckmetallblech mit gestreckten, Hohlräume aufweisenden Bereichen und nicht gestreckten, keine Hohlräume aufweisenden Bereichen versehen. Daraufhin werden die gestreckten Bereiche mit dem Sintermetallpulver beschichtet, gesintert und anschließend wird das Streckmetallblech zu der Filtertasche 1 umgeformt, wobei die gestreckten Bereiche das Taschenteil 3 und die nicht gestreckten Bereiche das Verbindungsteil 4 bilden, welches zur Verbindung der Filtertasche 1 mit dem Haltelement 7 vorgesehen ist. Bei der Beschichtung des Streckmetallblechs lagert sich das Sintermetallpulver selbständig an den Hohlräumen der gestreckten Bereiche ab und kann sich im Gegensatz dazu an den nicht gestreckten Bereichen nicht ablagern, da sich hier keine Hohlräume befinden.

Bei beiden Ausführungsformen der Filtertasche 1 ist der Übergang von der Rechteckform des Taschenteils 3 zu der Keilform des Verbindungsteils 4 sanft ausgeführt und kann sich über einen längeren Bereich des Verbindungsteils 4 erstrecken, um die oben beschriebenen Umformvorgänge zu erleichtern.

Fig. 3 zeigt einen Schnitt durch das Taschenteil 3 der Filtertasche 1 aus Fig. 2. Allerdings könnte ein Schnitt durch die Filtertasche 1 gemäß Fig. 1 ähnlich oder sogar identisch aussehen, da das Taschenteil 3 von Fig. 1 und dasjenige von Fig. 2 keine wesentlichen geometrischen Änderungen aufweisen. Dies gilt im wesentlichen auch für das Verbindungsteil 4. Im Inneren des Taschenteils 3 sind an den Seitenwänden 5 angeordnete Distanzelemente 8 zu erkennen, welche dafür sorgen, dass der Abgasdruck die Seitenwände 5 nicht zusammenpressen und somit das Volumen innerhalb der Filtertasche 1 verkleinern kann. Somit ist stets ein ausreichendes Volumen innerhalb der Filtertasche 1 sichergestellt und die Stabilität derselben gewährleistet. Die Distanzelemente 8 sind dabei so ausgeführt, dass sich entweder einander gegenüberliegende Distanzelemente 8 berühren oder dass sie die jeweils gegenüberliegende Seitenwand 5 berühren. In Fig. 3 sind beide Beispiele dargestellt. Die Distanzelemente 8 sind im vorliegenden Fall als Noppen ausgebildet, es könnte sich jedoch auch um in Längs- und/oder Querrichtung der Seitenwände 5 verlaufende Stege oder Rippen handeln. Solche nicht dargestellten Stege oder Rippen können als z.B. axial verlaufende Einprägungen bzw. Sicken in einer der Seitenwände 5 ausgeführt sein, wobei die Noppen der gegenüberliegenden Seitenwand 5 eine solche Sicke berührt.

In Fig. 4 ist der Partikelfilter 2 dargestellt, der mehrere radial nebeneinander angeordnete Filtertaschen 1 aufweist, die an einer Seite an einem Verschluss- bzw. Dichtelement 9 und an einer gegenüberliegenden Seite an einem Außenring 10 angebracht sind. Der Außenring 10 bildet somit das Halteelement 7, mit dem mehrere Filtertaschen 1 zur Bildung des Partikelfilters 2 gehalten werden können. Durch ihre Form halten sich die Filtertaschen 1 in ihrem inneren Bereich selbst. An der gegenüberliegenden Seite des Außenrings 10 kann sich ein ähnliches Bauteil befinden, um eine größere Steifigkeit des Partikelfilters 2 zu erreichen.

In Fig. 4 ist des weiteren erkennbar, dass die Filtertaschen 1 auf der dem Außenring 10 gegenüberliegenden Seite in Umfangsrichtung voneinander beabstandet sind, sodass der Abgasstrom problemlos zwischen die einzelnen Filtertaschen 1 einströmen kann und sich in den entstehenden Zwischenräumen Asche und sonstige Partikel ansammeln können. Die Verbindungsteile 4 sind jedoch, wie bereits oben erwähnt, derart verbreitert bzw. weisen eine derartige Keilform auf, dass an derjenigen Seite des Partikelfilters 2, an dem sich das Dichtelement 9 und der Außenring 10 befinden, der Abgasstrom daran gehindert wird, zwischen zwei Filtertaschen 1 hindurchzuströmen. Dadurch wird der Abgasstrom gezwungen, in die Taschenteile 3 einzuströmen und die Filtertaschen 1 durch die Öffnungen 6 der Verbindungsteile 4 zu verlassen, was die sehr gute Reinigungswirkung des Partikelfilters 2 gewährleistet. Das Dichtelement 9 sperrt somit den Gasweg ab und schließt aus, dass das Gas an einer anderen Stelle als an den Öffnungen 6 entweichen kann.

Zur Erhöhung der Dichtigkeit in diesem Auslassbereich des Partikelfilters 2 sind die Verbindungsteile 4 außerdem miteinander sowie mit dem Dichtelement 9 und dem Außenring 10 verschweißt. Hierzu können an dem Außenring 10 entsprechende Aussparungen angebracht sein, um den Verbindungsteilen 4 eine entsprechende Führung zu gewährleisten. Auch die Filtertaschen 1 könnten entsprechende Aussparungen zur Verbindung mit dem Außenring 10 aufweisen. Als Schweißverfahren bietet sich in diesem Zusammenhang beispielsweise Laserschweißen an. Selbstverständlich kann jedoch auch WIG-Schweißen, Rollnahtschweißen oder ein anderes Schweißverfahren geeignet sein.

## Patentansprüche

1. Filtertasche (1) für einen Partikelfilter (2) zur Beseitigung von in einem Abgasstrom, insbesondere in einer Abgasanlage einer Brennkraftmaschine, enthaltenen Partikeln, mit einem Taschenteil (3), welches aus einem mit einem Sintermetallpulver beschichteten, gasdurchlässigen Trägermaterial besteht,
**gekennzeichnet durch**
ein mit dem Taschenteil (3) verbundenem Verbindungsteil (4), welches zur Verschweißung mit einem Halteelement (7) vorgesehen ist, wobei das Taschenteil (3) und das Verbindungsteil (4) gemeinsam ein Volumen bilden, und wobei das Verbindungsteil (4) aus einem gasundurchlässigen Material besteht.

2. Filtertasche nach Anspruch 1,
**dadurch gekennzeichnet,**
**dass** das Verbindungsteil (4) aus einem temperaturbeständigen Metallblech besteht.

3. Filtertasche nach Anspruch 1 oder 2,
**dadurch gekennzeichnet,**
**dass** das Taschenteil (3) und das Verbindungsteil (4) zwei separate, durch Verschweißen miteinander verbundene Bauteile sind.

4. Filtertasche nach Anspruch 1 oder 2,
**dadurch gekennzeichnet,**
**dass** das Taschenteil (3) und das Verbindungsteil (4) aus einem einstückigen Material ausgebildet sind.

5. Filtertasche nach Anspruch 4,
**dadurch gekennzeichnet,**
**dass** das Taschenteil (3) und das Verbindungsteil (4) aus einem einstückigen Streckmetallblech mit gestreckten Bereichen und nicht gestreckten Bereichen gebildet sind, wobei die gestreckten Bereiche des Streckmetallblechs das Taschenteil (3) und die nicht gestreckten Bereiche des Streckmetallblechs das Verbindungsteil (4) bilden.

6. Filtertasche nach einem der Ansprüche 1 bis 5,
**dadurch gekennzeichnet,**
**dass** das Taschenteil (3) zwei Seitenwände (5) aufweist, welche in Längs- und/oder Querrichtung (A,B) der Filtertasche (1) im wesentlichen parallel zueinander verlaufen.

7. Filtertasche nach Anspruch 6,
**dadurch gekennzeichnet,**
**dass** innerhalb des Taschenteils (3) zwischen den Seitenwänden (5) Distanzelemente (8) angeordnet sind.

8. Partikelfilter (2) zur Beseitigung von in einem Abgasstrom, insbesondere in einer Abgasanlage einer Brennkraftmaschine, enthaltenen Partikeln, mit mehreren nebeneinander angeordneten Filtertaschen (1) gemäß einem der Ansprüche 1 bis 7.

9. Partikelfilter nach Anspruch 8,
**dadurch gekennzeichnet,**
**dass** die Filtertaschen (1) radial angeordnet sind, wobei die Filtertaschen (1) an einem Außenring (10) als Halteelement (7) angebracht sind und der Gasweg mittels eines Dichtelements (9) abgesperrt ist.

10. Partikelfilter nach Anspruch 8 oder 9,
**dadurch gekennzeichnet,**
**dass** die Verbindungsteile (4) der Filtertaschen (1) mit dem Außenring (10) verschweißt sind.

11. Partikelfilter nach Anspruch 8 oder 9,
**dadurch gekennzeichnet,**
**dass** die Filtertaschen (1) in Umfangsrichtung voneinander beabstandet sind.

12. Verfahren zur Herstellung einer Filtertasche (1) für einen Partikelfilter (2) zur Beseitigung von in einem Abgasstrom, insbesondere in einer Abgasanlage einer Brennkraftmaschine, enthaltenen Partikeln mit folgenden Verfahrensschritten:
Ein gasdurchlässiges Trägermaterial wird mit einem Sintermetallpulver beschichtet,
aus dem beschichteten Trägermaterial wird ein Taschenteil (3) gebildet,
aus einem gasundurchlässigen Material wird ein Verbindungsteil (4) zur Verbindung der Filtertasche (1) mit einem Halteelement (7) gebildet,
das Taschenteil (3) und das Verbindungsteil (4) werden miteinander verbunden.

13. Verfahren nach Anspruch 12,
**dadurch gekennzeichnet,**
**dass** das Taschenteil (3) und das Verbindungsteil (4) miteinander verschweißt werden.

14. Verfahren zur Herstellung einer Filtertasche (1) für einen Partikelfilter (2) zur Beseitigung von in einem Abgasstrom, insbesondere in einer Abgasanlage einer Brennkraftmaschine, enthaltenen Partikeln mit folgenden Verfahrensschritten:
Ein Streckmetallblech wird mit gestreckten Bereichen und nicht gestreckten Bereichen versehen,
die gestreckten Bereiche werden mit einem Sintermetallpulver beschichtet,
das Streckmetallblech wird zu einer Filtertasche (1) umgeformt, wobei die gestreckten Bereiche ein Taschenteil (3) und die nicht gestreckten Bereiche ein Verbindungsteil (4) zur Verbindung der Filtertasche (1) mit einem Halteelement (7) bilden.

## Claims

1. Filter bag (1) for a particle filter (2) for the removal of particles contained in an exhaust gas flow, in particular in an exhaust system of an internal combustion engine, with a bag part (3) consisting of a gas-permeable substrate coated with a sintered metal powder,
**characterised by**
a connecting part (4) joined to the bag part (3) and provided for welding to a retaining element (7), wherein the bag part (3) and the connecting part (4) together form a volume and wherein the connecting part (4) consists of a gas-impermeable material.

2. Filter bag according to claim 1,
**characterised in that**
the connecting part consists of a temperature resistant sheet metal.

3. Filter bag according to claim 1 or 2,
**characterised in that**
the bag part (3) and the connecting part (4) are two separate components joined to one another by welding.

4. Filter bag according to claim 1 or 2,
**characterised in that**
the bag part (3) and the connecting part (4) are formed from a single-piece material.

5. Filter bag according to claim 4,
**characterised in that**
the bag part (3) and the connecting part (4) are formed from a single-piece expanded metal sheet with expanded regions and non-expanded regions, the expanded regions of the expanded metal sheet forming the bag part (3) and the non-expanded regions of the expanded metal sheet forming the connecting part (4).

6. Filter bag according to any of claims 1 to 5,
**characterised in that**
the bag part (3) has two side walls (5) extending substantially parallel to one another in the longitudinal and/or transverse direction (A, B) of the filter bag (1).

7. Filter bag according to claim 6,
**characterised in that**
spacers (8) are arranged within the bag part (3) between the side walls (5).

8. Particle filter (2) for the removal of particles contained in an exhaust gas flow, in particular in an exhaust system of an internal combustion engine, with a plurality of filter bags (1) according to any of claims 1 to 7 arranged adjacent to one another.

9. Particle filter according to claim 8,
**characterised in that**
the filter bags (1) are arranged radially, wherein the filter bags (1) are attached to an outer ring (10) serving as a retaining element (7) and the gas path is blocked by means of a sealing element (9).

10. Particle filter according to claim 8 or 9,
**characterised in that**
the connecting parts (4) of the filter bags (1) are welded to the outer ring (10).

11. Particle filter according to claim 8 or 9,
**characterised in that**
the filter bags (1) are spaced relative to one another in the circumferential direction.

12. Method for the production of a filter bag (1) for a particle filter (2) for the removal of particles contained in an exhaust gas flow, in particular in an exhaust system of an internal combustion engine, comprising the following process steps:
a gas-permeable substrate is coated with a sintered metal powder;
a bag part (3) is formed from the coated substrate;
a connecting part (4) for joining the filter bag (1) to a retaining element (7) is made from a gas-impermeable material;
the bag part (3) and the connecting part (4) are joined to one another.

13. Method according to claim 12,
**characterised in that**
the bag part (3) and the connecting part (4) are welded to one another.

14. Method for the production of a filter bag (1) for a particle filter (2) for the removal of particles contained in an exhaust gas flow, in particular in an exhaust system of an internal combustion engine, comprising the following process steps:
an expanded metal sheet is provided with expanded regions and non-expanded regions;
the expanded regions are coated with a sintered metal powder;
the expanded metal sheet is formed into a filter bag (1), the expanded regions forming a bag part (3) and the non-expanded regions forming a connecting part (4) for joining the filter bag (1) to a retaining element (7).

## Revendications

1. Poche de filtration (1) pour un filtre à particules (2) servant à éliminer des particules contenues dans un flux de gaz d'échappement, en particulier dans un système de gaz d'échappement d'un moteur à combustion interne, avec une partie de poche (3), qui est constituée d'un matériau support perméable aux gaz, enduit d'une poudre de métal fritté, **caractérisée par** un élément de liaison (4) relié à la partie de poche (3), lequel sert au soudage à un élément de retenue (7), la partie de poche (3) et l'élément de liaison (4) formant ensemble un volume, et l'élément de liaison (4) étant constitué d'un matériau imperméable aux gaz.

2. Poche de filtration selon la revendication 1, **caractérisée en ce que** l'élément de liaison (4) est constitué d'une tôle métallique à résistance thermique.

3. Poche de filtration selon la revendication 1 ou 2, **caractérisée en ce que** la partie de poche (3) et l'élément de liaison (4) sont deux éléments distincts reliés l'un à l'autre par soudage.

4. Poche de filtration selon la revendication 1 ou 2, **caractérisée en ce que** la partie de poche (3) et l'élément de liaison (4) sont conçus à partir d'un matériau d'un seul tenant.

5. Poche de filtration selon la revendication 4, **caractérisée en ce que** la partie de poche (3) et l'élément de liaison (4) sont conçus à partir d'une tôle en métal déployé d'un seul tenant avec des zones déployées et des zones non déployées, les zones déployées de la tôle en métal déployé forment la partie de poche (3) et les zones non déployées de la tôle en métal déployé forment l'élément de liaison (4).

6. Poche de filtration selon l'une quelconque des revendications 1 à 5, **caractérisée en ce que** la partie de poche (3) présente deux parois latérales (5) qui s'étendent essentiellement parallèlement l'une par rapport à l'autre dans le sens longitudinal et / ou transversal (A, B) de la poche de filtration (1).

7. Poche de filtration selon la revendication 6, **caractérisée en ce qu'**à l'intérieur de la partie de poche (3) sont disposés des éléments d'écartement (8) entre les parois latérales (5).

8. Filtre à particules (1) servant à éliminer des particules contenues dans un flux de gaz d'échappement, en particulier dans un système de gaz d'échappement d'un moteur à combustion interne, avec plusieurs poches de filtration (1) disposées les unes à proximité des autres selon l'une quelconque des revendications 1 à 7.

9. Filtre à particules selon la revendication 8, **caractérisé en ce que** les poches de filtration (1) sont disposées radialement, les poches de filtration (1) étant montées sur une bague extérieure (10) en tant qu'élément de retenue (7) et la trajectoire de gaz étant bloquée au moyen d'un élément d'étanchéité (9).

10. Filtre à particules selon la revendication 8 ou 9, **caractérisé en ce que** les éléments de liaison (4) des poches de filtration (1) sont soudés à la bague extérieure (10).

11. Filtre à particules selon la revendication 8 ou 9, **caractérisé en ce que** les poches de filtration (1) sont éloignées les unes des autres dans la direction périphérique.

12. Méthode de fabrication d'une poche de filtration (1) pour un filtre à particules (2) servant à éliminer les particules contenues dans un flux de gaz d'échappement, en particulier dans un système de gaz d'échappement d'un moteur à combustion interne comprenant les étapes suivantes :
- un matériau support perméable aux gaz est enduit d'une poudre de métal fritté,
- une partie de poche (3) est conçue à partir d'un matériau support enduit,
- un élément de liaison (4) est conçu à partir d'un matériau imperméable aux gaz servant à relier la poche de filtration (1) à un élément de retenue (7),
- la partie de poche (3) et l'élément de liaison (4) sont reliés l'un à l'autre.

13. Méthode selon la revendication 12, **caractérisée en ce que** la partie de poche (3) et l'élément de liaison (4) sont soudés l'un à l'autre.

14. Méthode de fabrication d'une poche de filtration (1) pour un filtre à particules (2) servant à éliminer des particules contenues dans un flux de gaz d'échappement, en particulier dans un système de gaz d'échappement d'un moteur à combustion interne comprenant les étapes suivantes :
- une tôle de métal déployé est pourvue de zones déployées et de zones non déployées,
- les zones déployées sont enduites d'une poudre de métal fritté,
- la tôle de métal déployé est façonnée en forme d'une poche de filtration (1), les zones déployées formant une partie de poche (3) et les zones non déployées formant un élément de liaison (4) servant à relier la poche de filtration (1) à un élément de retenue (7).
